# EUROPEAN PATENT APPLICATION

(11) **EP 1 925 411 A2**
(43) Date of publication of application: **28.05.2008**
(21) Application number: 07121247.6
(22) Date of filing: 21.11.2007
(51) Int. Cl.: B27C 5/06, B27M 1/08, B23Q 15/00

(54) **A machine for working wood panels or the like**

(30) Priority: 22.11.2006 IT BO20060797
(71) Applicant: IMPRESA 2000 DI SACCHI PARIDE E C. s.a.s., 47900 Rimini (IT)
(72) Inventor: Sacchi, Paride, 47900, RIMINI (IT)
(74) Representative: Jorio, Paolo

(57) **Abstract**

A machine for working wood panels (2) or the like is provided with a conveyor device (30) for feeding at least one panel (2) in a determined direction (22), with an operating head (15) for working the panel (2) and with a detecting device (46) for directly controlling the position of the panel (2) in the direction (22) during its feed along the direction (22) itself.

## Description

The present invention relates to a machine for working wood panels or the like.

Specifically, the present invention relates to a machine for working wood panels of the type comprising a base defining a substantially horizontal resting plane for at least one panel, a conveyor device for feeding the panel along the resting plane in a first horizontal direction, and at least an operating head for the panel working movable in a second horizontal direction transverse to the first direction.

Generally, the conveyor device comprises a feeding channel, which extends in the aforesaid first direction, and is at least in part laterally limited by a belt conveyor comprising a belt wound around a pair of pulleys and adapted to feed the panel along the feeding channel itself.

The belt conveyor is activated by means of an electric motor connected to one of the pulleys and controlled by means of an encoder, the signals of which, proportional to the number of revolutions of the output shaft of the electric motor, are used in an electronic control unit to calculate the position of the panel along the feeding channel.

As the encoder directly controls the electric motor and thus is not able of taking into account the slips which may occur between the belt and the panel due to the elasticity and/or the wear of the belt itself, the above-described panel working machines of the known type present some drawbacks mainly deriving from the fact that the position of the panel along the feeding channel calculated by the electronic control unit in response to the signals from the encoder is relatively imprecise and may differ from the real position of the panel along the feeding channel itself.

It is an object of the present invention to provide a machine for working wood panels or the like which is free from the above-described drawbacks.

According to the present invention, there is provided a machine for working wood panels or the like as claimed in the appended claims.

The present invention will now be described with reference to the accompanying drawings, which illustrate a non-limitative embodiment thereof, in which:
figure 1 is a first diagrammatic side view, with parts removed for clarity, of a preferred embodiment of the machine of the present invention;
figure 2 is a second diagrammatic side view, with parts removed for clarity, of the machine in figure 1;
figure 3 is a diagrammatic plan view, with parts removed for clarity, of the machine in figures 1 and 2; and
figure 4 is similar to figure 1 and illustrates the machine of the present invention in a different operative position.

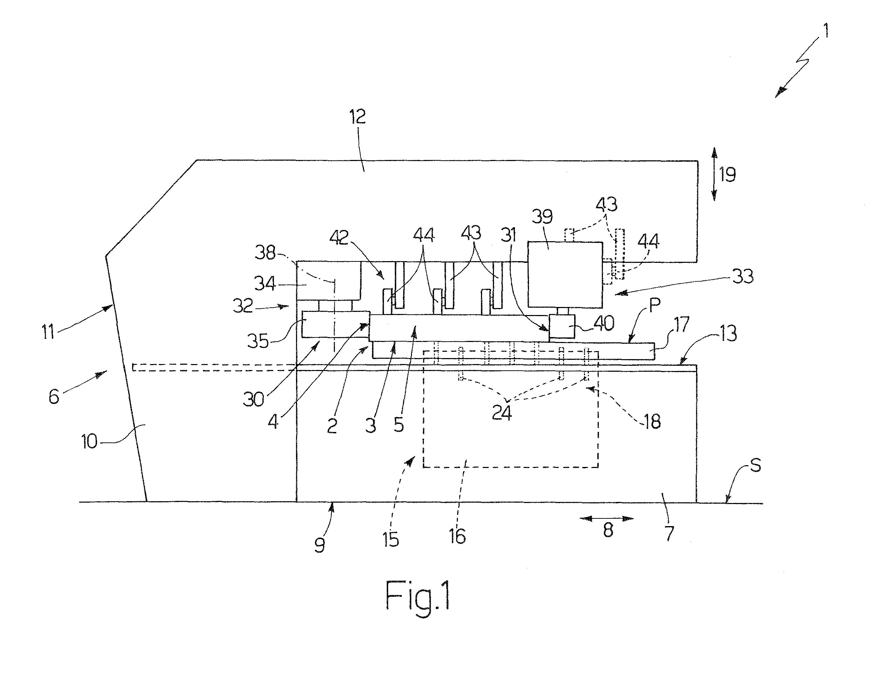

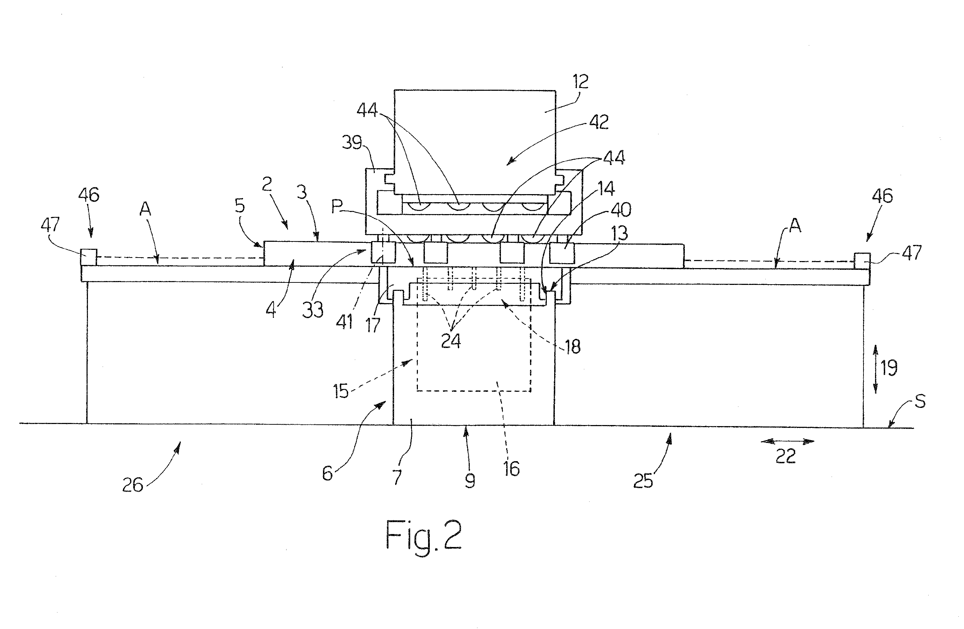

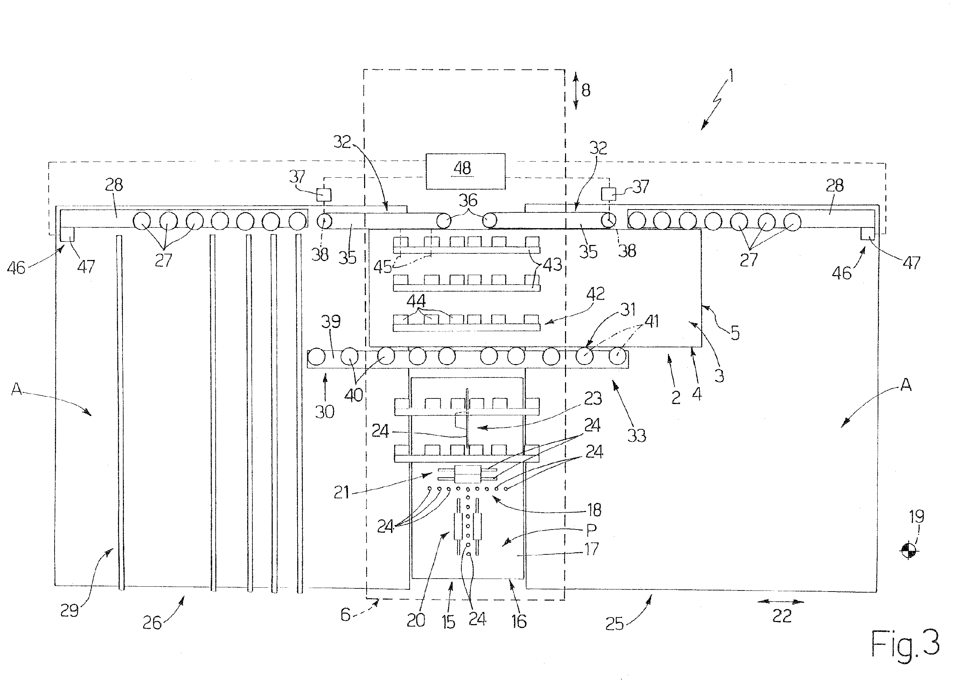

With reference to figures 1, 2, and 3, numeral 1 indicates as a whole a machine for working wood panels 2 or the like, each of which has a substantially parallelepiped shape with a substantially rectangular section, and presents two reciprocally parallel larger side faces 3, two reciprocally parallel smaller side faces 4 orthogonal to faces 3, and two reciprocally parallel smaller side faces orthogonal to the faces 3 and 4.

The machine 1 is provided with a base 6 which, in this case, is substantially C-shaped, and comprises a lower cross-piece 7, which extends in a substantially horizontal direction 8, and is arranged in contact with the ground S with a substantially flat lower face 9 thereof, an upright 10, which protrudes upwards from the cross-piece 7, and is laterally limited by a substantially flat face 11 inclined by an angle greater than 90° with respect to the face 9, and an upper cross-piece 12 substantially parallel to the cross-piece 7 itself.

According to variants (not shown), the base 6 may be substantially L-shaped or closed-ring-shaped.

The cross-piece 7 is limited at its upper part by a substantially flat face 13 parallel to the face 9, and presents a cavity 14, which opens outwards at the face 13, extends parallel to the direction 8, and is slidingly engaged by an operating head 15.

The head 15 comprises a slide 16, which is slidingly coupled to the cross-piece 7 to perform rectilinear displacements along the cavity 14 in the direction 8, and protrudes upwards from the cavity 14 to support a resting plate 17, which is substantially horizontal and parallel to the face 13, and defines a resting plane P for the panels 2 being machined.

The slide 16 further accommodates a plurality of operating units therein which, in this case, are defined by a vertical drilling unit 18 for making holes parallel to a vertical direction 19 orthogonal to the direction 8, by a first horizontal drilling unit 20 for making holes parallel to the direction 8, by a second horizontal drilling unit 21 for making holes parallel to a substantially horizontal direction 22 orthogonal to the directions 8 and 19, and by a cutting unit 23 for sectioning the panels 2 parallelly to the direction 8.

The units 18, 20, 21, and 23 and/or the corresponding tools 24 are movable in the direction 19 in reciprocally independent manner in order to selectively displace the tools 24 themselves between a lowered position, in which the tools 24 are arranged underneath the plane P, and a raised position, in which the tools 24 protrude through and over the plane P for working the panels 2.

The head 15 may possibly be provided with at least one elecrospindle (not shown) for working the panels 2 by milling.

Furthermore, the machine 1 comprises an inlet station 25 and an outlet station 26, which are arranged on opposite sides of the base 6 in the direction 22, and present corresponding resting planes A, each of which is substantially coplanar to the plane P, and is laterally limited in the direction 8 by a plurality of resting rollers 27 rotationally mounted on a supporting bar 28 parallel to the direction 22 itself.

In this case, the panels 2 are manually loaded inside the station 25 and in contact with the corresponding rollers 27 and are unloaded from the station 26 by means of a belt conveyor 29 extending in the direction 8.

The machine 1 is further provided with a conveyor device 30, which is adapted to feed the panels 2 in the direction 22 between the inlet station 25 and the outlet station 26 and through the base 6, and comprises a feeding channel 31 laterally limited on one side by a pair of belt conveyors 32 and on the other side by a roller presser 33 adapted to engage the two faces 4 of the panel 2 being worked.

The two conveyors 32 are reciprocally aligned in the direction 22, are reciprocally spaced so as to allow the drilling by the unit 20, and are mounted on a supporting bar 34 fixed to the upper cross-piece 12 of the base parallelly to the direction 22. Each conveyor 32 comprises a belt 35 movable on a horizontal plane and wound about a pair of pulleys 36 rotationally coupled to the bar 34 to rotate, driven by an electric motor 37 connected to one of the pulleys 36 themselves, about corresponding rotation axes 38 parallel to the direction 19.

The presser 33 comprises a supporting bar 39, which extends in the direction 22, and is slidingly coupled to the upper cross-piece 12 of the base 6 to perform, with respect to the base 6 and driven by an actuating device of the known type (not shown), rectilinear displacements in the direction 8 according to the width of the panels 2, and in a plurality of pressing rollers 40 rotationally mounted on the bar 39 to rotate about corresponding rotation axes 41 parallel to the axes 38.

The device 30 cooperates with an upper roller presser 42 comprising a plurality of supporting bars 43, which extend in the direction 22, are distributed along the upper cross-piece 12 of the base 6 in the direction 8, and each of them supports a corresponding plurality of pressing rollers 44 rotationally mounted on the corresponding bar 43 to rotate about corresponding rotation axes 45 parallel to the direction 8.

The bars 43 are slidingly coupled to the cross-piece 12 so as to selectively displace in the direction 19, driven by corresponding actuating devices of the known type (not shown) and according to the width of the panels 2, measured parallelly to the direction 8, between a raised home position, in which the corresponding rollers 44 are arranged at a determined distance from the panels 2, and a lowered operative position, in which the corresponding rollers 44 engage the upper faces 3 of the panels 2 themselves.

Furthermore, the machine 1 comprises a detecting device 46 for directly controlling the position of the panels 2 in the direction 22 during their displacement in the direction 22 itself.

In this case, the device 46 comprises two detecting units 47 of optical type, which are arranged on opposite sides of the base 6 in the direction 22, are mounted in the inlet and outlet stations 25 and 26 respectively over the corresponding resting planes A, are arranged in a position facing the faces 5 of the panels 2 so as to directly detect the position of the panels 2 along the channel 31, and each comprises, in this case, a corresponding laser source adapted to irradiate the corresponding face 5 and a corresponding receiver for receiving the rays reflected by the corresponding face 5 itself.

According to variants (not shown):
the laser detecting units 47 may be eliminated and replaced by detecting units of different optical type;
the optical detecting units 47 may be eliminated and replaced by detecting unit of different type, e.g. radio waves; and
one of the detecting units 47 may be eliminated so as to control the position of the panels 2 along the channel 31 with a single unit 47.

The two units 47 are connected to an electronic control unit 48, which processes the signals from the units 47, calculates the position of the panel 2 in the direction 22 in real time, and controls the operation of the electric motors 37 of the two belt conveyors 32 so as to stop the two belts 35 only when the panel 2 actually reaches the correct position.

In other words, since the two units 47 directly control the panel 2, the position of the panel 2 in the direction 22 calculated by the control unit 48 according to the signals from the units 47 themselves coincides in each moment with the real position of the panel 2 and the calculation of the control unit 48 is not affected in any manner by possible corresponding displacements which may occur between the panel 2 and the belts 35.

The operation of the machine 1 is a result of the above description and does not require further explanations.

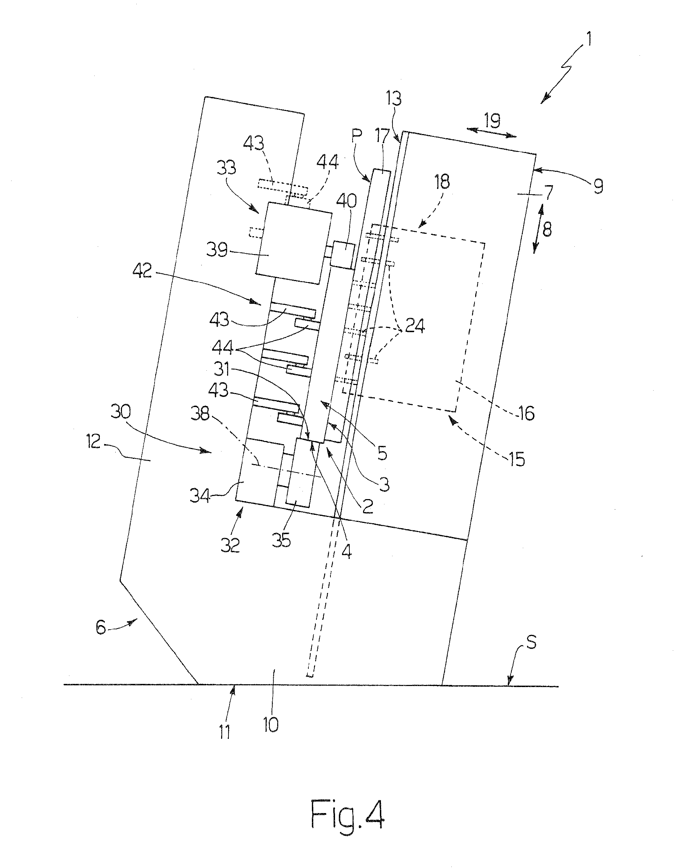

The variant in figure 4 differs from that shown in the previous figures only in that the machine 1 is installed with the upright 10 in contact with the ground S. In other words, the base 6 is shaped so as to allow the installation of the machine 1 in two different operative positions, i.e. with the cross-piece 7 in contact with the ground S (figure 1) or with the upright 10 in contact with the ground S (figure 4), without implying any change to the base 6 or to the devices carried by the base 6 itself.

When the machine is installed with the cross-piece 7 in contact with the ground S, the plane P is substantially horizontal; while when the machine 1 is installed with the upright 10 in contact with the ground S, the plane P is inclined by an angle comprised between 45° and 90° with respect to the ground S and allows to use the machine 1 also in plants with relatively small floor surfaces.

## Claims

1. A machine for working wood panels (2) or the like comprising conveyor means (30) for feeding at least one panel (2) in a determined first direction (22); and at least one operating head (15) for working the panel (2) itself; and **characterized in that** it comprises detecting means (46) for directly controlling the position of the panel (2) in said first direction (22) during its feeding along the first direction (22) itself.

2. A machine according to claim 1, wherein the panel (2) presents two reciprocally larger faces (3) and a side contour (4, 5); the detecting means (46) being arranged in a position facing said side contour (4, 5) for directly controlling the position of the panel (2) in said first direction (22).

3. A machine according to claim 1 or 2, wherein said conveyor means (30) comprise feeding means (32, 33) adapted to engage the panel (2) in order to feed it along said first direction (22) and actuator means (37) connected to said detecting means (46) for controlling the operation of the feeding means (32, 33) in response to a signal from the detecting means (46) themselves.

4. A machine according to claim 3, wherein said feeding means (32, 33) comprise a belt and/or a roller conveyor device.

5. A machine according to any of the preceding claims, wherein the detecting means (46) are of optical type.

6. A machine according to any of the preceding claims, wherein the detecting means (46) comprise at least one irradiating device (47) for irradiating the panel (2) and at least one receiving device (47) for receiving the rays reflected by the panel (2) itself.

7. A machine according to claim 6, wherein the irradiating device (47) comprises at least one laser source.

8. A machine according to any of the preceding claims, wherein said detecting means (46) comprise two detecting units (47) arranged in use on opposite sides of the panel (2) in said first direction (22).

9. A machine according to any of the preceding claims, wherein the operating head (15) is movable in a second direction (8) substantially transverse to the first direction (22).

10. A machine according to claim 9, wherein the operating head (15) comprises drilling means (20, 21) for drilling the panel (2) in said first and/or second directions (22, 8).

11. A machine according to claim 9 or 10, wherein the operating head (15) comprises cutting means (23) for sectioning the panel (2) parallelly to said second direction (8).

12. A machine according to any of claims from 9 to 11, wherein the operating head (15) further comprises a resting table (17) defining a resting plane (P) for said panel (2) and movable in said second direction (8).

13. A machine for working wood panels (2) or the like comprising supporting means (17) for at least one panel (2); at least one operating head (15) for working the panel (2) itself; and one base (6) on which the supporting means (17) and the operating head (15) are mounted; **characterized in that** the base (6) is shaped so as to be arranged in contact with a supporting surface (S) in at least two operative positions.

14. A machine according to claim 13, wherein the supporting means (17) define a resting plane (P) for said panel (2).

15. A machine according to claim 14, wherein, when the base (6) is arranged in a first said operative position, the resting plane (P) is substantially horizontal.

16. A machine according to claim 14, wherein, when the base (6) is arranged in a second said operating position, the resting plane (P) is inclined by an angle comprised between 45° and 90° with respect to said resting surface (S).

17. A machine according to any of claims from 13 to 16, wherein the base (6) is limited by two substantially flat faces (9, 11) adapted to be selectively arranged in contact with the resting surface (S) for supporting the base (6) in said operative positions.

18. A machine according to any of claims from 13 to 17, wherein the base (6) is substantially L-shaped.

19. A machine according to any of claims from 13 to 17, wherein the base (6) is substantially C-shaped.

20. A machine according to any of claims from 13 to 17, wherein the base (6) is substantially closed-ring-shaped.
